# EUROPÄISCHE PATENTSCHRIFT

(11) **EP 0 907 620 B1**
(45) Veröffentlichungstag und Bekanntmachung des Hinweises auf die Patenterteilung: **10.10.2001**
(21) Anmeldenummer: 97923871.4
(22) Anmeldetag: 12.05.1997
(51) Int. Cl.: C04B 38/02, B22F 3/11

(54) **VERFAHREN ZUR STABILISIERUNG VON SINTERSCHAUM UND ZUR HERSTELLUNG VON OFFENZELLIGEN SINTERSCHAUMTEILEN**
METHOD OF STABILIZING SINTERED FOAM AND OF PRODUCING OPEN-CELL SINTERED FOAM PARTS
PROCEDE DE STABILISATION DE MOUSSE AGGLOMEREE ET DE PRODUCTION DE PIECES EN MOUSSE AGGLOMEREE A ALVEOLES OUVERTS

(30) Priorität: 17.05.1996 DE 19619986
(43) Veröffentlichungstag der Anmeldung: 14.04.1999
(73) Patentinhaber: BASF AKTIENGESELLSCHAFT, 67056 Ludwigshafen (DE)
(72) Erfinder: STERZEL, Hans-Josef, D-67125 Dannstadt-Schauernheim (DE)
(74) Vertreter: Isenbruck, Günter
(86) Internationale Anmeldenummer: EP9702412
(87) Internationale Veröffentlichungsnummer: WO9744292

(56) Entgegenhaltungen:
- EP-A- 0 260 826
- DE-A- 3 816 893
- DE-C- 583 301
- DE-C- 846 525
- GB-A- 2 213 814
- BUCHMANN ALBERT, BERTZ TASSILO: "Aminoplaste" 1970 , VEB DEUTSCHER VERLAG FÜR GRUNDSTOFFINDUSTRIE , LEIPZIG XP002038754 in der Anmeldung erwähnt siehe Seite 153 - Seite 165

## Beschreibung

Die Erfindung bezieht sich auf die Stabilisierung von verschäumten Ausgangsschlickermaterialien. Weiterhin bezieht sich die Erfindung auf Verfahren zum Herstellen von anorganischen Sinterschaumteilen.

Offenzellige anorganische Schäume sind bekannt. Sie werden nach vielfältigen Verfahren mit bisher unüberwindlichen Nachteilen und deshalb derart hohen Kosten hergestellt, daß sie nur in Sonderfällen genutzt werden. Das weitaus am meisten beanspruchte Verfahren besteht darin, daß offenzellige Polymerschäume mit einem Schlickermaterial infiltriert werden, das anorganische Partikel enthält. Der infiltrierte Polymerschaum, meist ein Polyurethanschaum, wird vorsichtig getrocknet und durch langsames kontrolliertes Erhitzen die organischen Bestandteile entfernt und das aus anorganischem Pulver bestehende Negativ gesintert. Darin liegt bereits der Grund für die aufwendige, kostspielige Herstellung. Sowohl die Trocknung des mit Schlikkermaterial ausgefüllten Porengefüges sowie das Wegpyrolysieren der organischen Bestandteile ist sehr zeitaufwendig. Zusätzlich sind die Materialdicken aufgrund der langsamen Trocknung und Pyrolyse auf wenige Zentimeter begrenzt. Die Herstellung derartiger Schäume wird beispielsweise in der DE-A 39 34 496 oder EP-A 157 974 beschrieben. Die EP-A 440 322 beschreibt die aufwendige Technologie, offenzellige keramische Schäume über eine Anordnung von Walzen zum Infiltrieren und Komprimieren der infiltrierten Polymerschäume herzustellen.

Für anorganische Schäume sind vielfältige Anwendungen wegen ihrer Hochtemperaturbeständigkeit und Medienbeständigkeit bekannt. So beschreiben die DE-A 37 32 654, die US-A 5 336 656, 5 256 387, 5 242 882 und 5 217 939 keramische Schäume als Träger für Katalysatoren, z.B. für die Rauchgasbehandlung. Mit ihrer statistischen Anordnung der Stege ergeben keramische Schäume bei sehr vorteilhaft niedrigem Druckverlust einen wesentlich besseren Stoffaustausch als extrudierte Wabenkörper, die in Strömungsrichtung aufgrund der Extrusionstechnologie keine Stege aufweisen können. Dies gilt insbesondere dann, wenn das Porenvolumen mehr als 50%, günstiger mehr als 70%, des Gesamtvolumens des Katalysatorträgers ausmacht und die Stege Dicken von weniger als 1 mm aufweisen. Geringe Druckverluste sind besonders in der Anwendung als Träger in der Rauchgasreinigung wichtig (DE-A 35 10 170), beim Fahrzeug-Abgaskatalysator (DE-A 37 31 888) oder in der Anwendung als Diesel-Abgasfilter (EP-A 312 501). Oft werden keramische Schäume auch als Filter zur Reinigung sehr heißer Schmelzen wie Metallschmelzen (US-A 4 697 632) oder zur Filtration heißer Gase eingesetzt (EP-A 412 931).

Alle diese Anwendungen bedienen sich der Herstellung offenzelliger Schäume durch das Infiltrieren offenzelliger Polymerschäume. So vielfältig wie die Anwendungen sind auch die beanspruchten anorganischen Materialien. Für Schäume mit niedriger thermischer Ausdehnung werden als Materialien Lithiumaluminiumsilikat oder Cordierit beansprucht. Derartige Schäume weisen eine besonders hohe Beständigkeit gegen krasse Temperaturwechsel auf, wie sie ein Kfz-Abgaskatalysator besitzen muß (JP-A 6 1295 283). Für Schmelzefilter von Metallen dagegen ist das inerte Verhalten gegenüber den Metallschmelzen wichtig. Hier werden α-Aluminiumoxid, Siliciumcarbid sowie SiO₂ oder insbesondere Mischungen davon eingesetzt (EP-A 412 673). Besonders für die Filtration von Eisenschmelzen oder Schmelzen eisenhaltiger Legierungen sind Schäume aus Siliciumcarbid geeignet (WO 88/07403). Auch Siliciumnitrid wird als Filtermaterial keramischer offenzelliger Schäume beschrieben (DE-A 38 35 807). Die EP-A 445 067 beschreibt als Filter für geschmolzene Metalle mit Y₂O₃ stabilisiertes Zirkonoxid bzw. ZrO₂/Al₂O₃-Mischkeramiken.

Neben der Infiltration von Polymerschäumen mit anorganischen Schlickermaterialien, gefolgt von Trocknen, Ausbrennen und Sintern, sind auch noch andere Methoden bekannt geworden, anorganische Schäume herzustellen:

Die WO 95/11752 beschreibt ein Verfahren, nach dem Metalle chemisch auf einem offenzelligen Polymerschaum abgeschieden werden und nach Trocknen und Pyrolysieren ein offenzelliger Metallschaum erhalten wird, der durch Oxidation in einen keramischen Schaum überführt werden kann. Auch hierbei sind Trocknen und Pyrolysieren sehr aufwendig. Trocknung und Pyrolyse werden vermieden nach dem in der EP-A 261 070 beanspruchten Verfahren, das zur Herstellung keramischer Schäume von einem Metallschaum, vorzugsweise einem Aluminiumschaum, ausgeht und bei dem dieser dann zum Metalloxid oxidiert wird. Ein Nachteil dieser Verfahren ist, daß auf irgendeine Weise vorher ein Metallschaum herzustellen ist. Ein Verfahren zur Herstellung von Metallschäumen (Fraunhofer-Institut für Angewandte Materialforschung, Bremen) geht von Aluminiumpulver aus, dem Titanhydrid-Pulver zugemischt wird. Die Pulvermischung wird in einer Form bis knapp über den Al-Schmelzpunkt erhitzt, wobei sich das Titanhydrid zersetzt und der entstehende Wasserstoff das geschmolzene Aluminium aufschäumt. In diesem nicht verallgemeinerbaren Fall passen die Schmelztemperatur des Aluminiums und der Zersetzungstemperaturbereich des Titanhydrids zusammen.

Auch bei anderen bekannten Verfahren wird Wasserstoff als Treibmittel zur Herstellung anorganischer Schäume eingesetzt: So ist es bekannt, stark alkalische Alkalimetallsilikate oder Alkalimetallaluminate mit einem Pulver eines unedlen Metalls, vorzugsweise Aluminium, zu mischen, wobei sich das Metall löst und Wasserstoff als Treibgas entwickelt wird. Nach dem Trocknen der Schäume müssen diese mit Ammoniumverbindungen behandelt werden, um nachteilig wirkende Alkalimetallionen zu entfernen. Nach dem Sintern können derartige Schäume weniger als 0,5 % Alkalimetallionen enthalten (EP-A 344 284, DE-A 38 16 893).

Ein "trockenes" Verfahren, keramische Schäume herzustellen, besteht darin, keramische Pulver mit vulkanischen Eruptionsprodukten zu vermischen, welche beim Erhitzen auf 900 - 1400 °C die entstehende Schmelze unter Gasentwicklung aufblähen (JP-A 6 0221 371). So hergestellte Schäume dienen vor allem als wärmeisolierendes (geschlossenzelliges) Baumaterial.

Die JP-A 2 290 211 beschreibt ein Verfahren zur Herstellung keramischer Metallschmelzefilter, in dem Harzpartikel verschiedener Größe, vorzugsweise aus geschäumtem Polystyrol, miteinander verbunden werden und die Zwischenräume mit einem keramischen Schlickermaterial infiltriert werden. Die organischen Bestandteile werden nach dem Trocknen bei 500 bis 600°C herauspyrolysiert, danach wird der Schaum bei 1200 bis 1800°C an Luft gesintert.

Offene Kanäle in keramischen Schäumen können auch erzeugt werden, indem man kurze organische Fasern wie Baumwolle, Polyamidfasern, Acrylfasern oder auch anorganische Fasern wie Graphitfasern auf eine klebende Unterlage aufbringt, weitere Fasern mit einem organischen Bindemittel aufbringt, das Fasergelege mit anorganischem Schlickermaterial infiltriert, trocknet, pyrolysiert und sintert (EP-A 341 203). So sollen Schäume mit weniger als 35% Porenvolumen erzeugt werden. Anwendungen sind Filter für geschmolzene Metalle.

Schließlich ist es auch bekannt, keramische Schäume zu erzeugen, indem man wäßrige keramische Schlickermaterialien mit wäßrigen Polymerdispersionen versetzt, die Mischung wie Sahne zu einem Schaum schlägt, bis er das 1,5- bis 10-fache des Anfangsvolumens einnimmt, den Schaum in eine Form einlaufen läßt, trocknet, die organischen Hilfsstoffe herauspyrolysiert und dann sintert (EP-A 330 963). Dabei beträgt der Gewichtsanteil an organischem Material 65 bis 95%, der Gewichtsanteil an Dispersion (Trockenmasse) 5 bis 50%, der durch Pyrolyse entfernt werden muß. Nachteilig für die Anwendungen solcher offenzelliger anorganischer Schäume ist, daß auch größere Luftblasen eingeschlagen werden und daß ein großer Teil der Schaumzellen geschlossen ist. Beim Schlagen wird Luft eingeschlossen, die gebildeten Zellen werden durch die Polymerdispersion stabilisiert und beim Trocknen nur teilweise gesprengt.

Aus DE-C 846 525 ist die Herstellung offenporiger Formkörper mit einer Porosität von 70 % durch Sintern von Aluminiumoxid bekannt. Dabei wird ein Ausgangsschlicker aus Aluminiumoxid, Wasserstoffperoxid, Wasser, Triethanolamin und Methylcellulose verschäumt und der verschäumte Schlicker anschließend einem Brennprozeß unterworfen. Über den Gehalt an Methylcellulose kann dabei die Festigkeit der Formkörper eingestellt werden.

Bei Versuchen, die Reaktivkomponenten von Polyurethanschäumen hoch mit anorganischen Pulvern zu füllen und durch deren Reaktion miteinander einen hochgefüllten offenzelligen Polyurethanschaum direkt zu erzeugen, aus dem sich aufgrund der Offenzelligkeit die organischen Bestandteile herauspyrolysieren ließen, ergeben sich Probleme. Die Molmasse der Komponenten zu Beginn des Aufschäumens ist nämlich so gering, daß die aufschäumende Mischung nicht elastisch genug ist, wodurch die Schaumbläschen zu früh aufplatzen und das Treibgas, CO₂, weitgehend ungenutzt entweicht. Es bilden sich aufgrund der mangelnden Elastizität auch rasch Risse in der Masse aus, aus denen das Treibgas ebenfalls ungenutzt verströmt.

Wenn man bei der Herstellung offenzelliger anorganischer Sinterschäume aus wäßrigen Schlickern die Fließeigenschaften des Materials während des Aufschäumens so ändert, daß die offene Porenstruktur stabilisiert wird, können gute Produkte erzeugt werden. Dabei arbeitet man mit einem hohen Volumenanteil an anorganischem Pulver. Durch das Sintern werden dichte, hochfeste Stege erhalten, erkenntlich aus dem Sinterschrumpf, der dem Volumenanteil von Wasser und Hilfsstoffen entspricht. Im wesentlichen durch Entziehen von geringen Anteilen Wasser kann die Festigkeit der aufschäumenden Masse derartig gesteigert werden, daß die Zellwände stabilisiert werden und nicht mehr zusammenfallen, obwohl bei Zellöffnung die stabilisierende Druckdifferenz entfällt. Selbst dieses Verfahren kann indessen noch verbessert werden, speziell hinsichtlich der Reproduzierbarkeit und Definiertheit des Verschäumergebnisses.

Aufgabe der vorliegenden Erfindung ist es, ein Verfahren und Schäume bereitzustellen, welche eine hervorragende Kontrolle der Schaumstruktur zulassen. Besonders soll ein Schäumen bei Raumtemperatur ohne organische Treibmittel ermöglicht und das Schäumen reproduzierbar gestaltet werden.

Diese Aufgabe wird gelöst durch ein Verfahren zum Stabilisieren eines verschäumten Ausgangsschlickermaterials, bei dem
1. ein Ausgangsschlickermaterial verschäumt wird, das folgende Bestandteile enthält:
   a. anorganisches Sintermaterial,
   b. Treibgasquelle,
   c. Gerüstbildner, der bei einer Veränderung des pH-Wertes des Ausgangsschlickermaterials ein Gerüst bildet,
   d. pH-Steuerungsmaterial,
   e. Flüssigkeit,
   f. ggf. eines oder mehrere der folgenden Materialien:
      - Dispergator
      - Binder
      - Viskositätsmodifizierer
      und
2. der pH-Wert des Ausgangsschlickermaterials zum Ingangsetzen bzw. Beschleunigen der Ausbildung des Gerüstes aus dem Gerüstbildner verändert wird.

Erfindungsgemäß wird ferner ein Verfahren zur Herstellung von anorganischen Sinterschaumteilen beansprucht, das dadurch gekennzeichnet ist,
1. daß in einer Verschäumstufe ein Ausgangsschlickermaterial verschäumt wird, das eine Zusammensetzung hat, wie sie vorstehend definiert ist,
2. daß in einer pH-Änderungsstufe der pH-Wert des Ausgangsschlickermaterials so verändert wird, daß der Gerüstbildner ein den geschäumten Ausgangsschlicker stabilisierendes Gerüst bildet und ein stabilisierter Schaumkörper erhalten wird,
3. daß gegebenenfalls der stabilisierte Schaumkörper in einer Entformungsstufe entformt und getrocknet wird,
4. daß in einer Gerüstentfernungsstufe das stabilisierende Gerüst aus dem stabilisierten Schaumkörper unter Ausbildung eines Grünschaumkörpers entfernt wird und
5. daß der Grünschaumkörper in einer Sinterstufe unter Ausbildung des anorganischen Sinterschaumteiles gesintert wird.

Insbesondere und bevorzugt kann man durch erfindungsgemäße Zugabe von Additiven das Schäumen so steuern, daß die schäumende Masse zunächst mit pH-Werten von 8 - 10 alkalisch reagiert, der pH-Wert gegen Ende des Schäumvorgangs während der Zellöffnung aber auf niedrige Werte von 3-6 in den sauren Bereich umschlägt und dieser pH-Umschlag dazu genutzt wird, ein in der Mischung vorhandenes wasserlösliches Harnstoff-Formaldehydharz innerhalb von 1 - 5 min zu härten und damit den Schaum zu stabilisieren.

Diese Erfindung wird im folgenden detailliert und anhand bevorzugter Ausführungsformen beschrieben:

Gegenstand der Erfindung ist also ein Verfahren zum Stabilisieren eines verschäumten Ausgangsschlickermaterials. Es wird dabei
1. ein Ausgangsschlickermaterial verschäumt, das folgende Bestandteile enthält:
   a. anorganisches Sintermaterial,
   b. Treibgasquelle,
   c. Gerüstbildner, der bei einer Veränderung des pH-Wertes des Ausgangsschlickermaterials ein Gerüst bildet,
   d. pH-Steuerungsmaterial,
   e. Flüssigkeit,
   f. gegebenenfalls eines oder mehrere der folgenden Materialien:
      - Dispergator
      - Binder
      - Viskositätsmodifizierer;
2. der pH-Wert des Ausgangsschlickermaterials zum Ingangsetzen bzw. Beschleunigen der Ausbildung des Gerüstes aus dem Gerüstbildner verändert.

Vorzugsweise ist dabei der Verfahrensablauf so, daß das Ingangsetzen bzw. Beschleunigen der Ausbildung des Gerüstes aus dem Gerüstbildner im wesentlichen nach der Verschäumung geschieht.

Bevorzugt werden erfindungsgemäß Treibgasquelle, pH-Steuerungsmaterial und Flüssigkeit mengenmäßig so aufeinander abgestimmt eingesetzt, daß die Flüssigkeit und das pH-Steuerungsmaterial eine Säure bilden, die zunächst mit der Treibgasquelle das Treibgas zur Schaumbildung freisetzt, und daß die weiter gebildete Säure dann mit dem Gerüstbildner das den Schaum stabilisierende Gerüst bildet.

Als Flüssigkeit für die Ausgangsschlickermaterialien wird vorzugsweise Wasser eingesetzt. Insbesondere wird in einer vorgelegten Menge Wasser mit Hilfe eines Dispergiermittels das anorganische Pulver in so hohen Volumenanteilen dispergiert, daß sich später beim Sintern dichte Zellwände oder Stege ausbilden. Je nach Sinteraktivität und Oberfläche der verwendeten Pulver liegen diese Volumenanteile vorzugsweise bei 30 bis 50 Vol.-% der Gesamtmischung.

Als anorganische Sintermaterialien werden vorzugsweise anorganische Pulver eingesetzt. Besonders bevorzugt sind Pulvermaterialien aus der Gruppe:
Metallpulver
mineralische Pulver
Keramikpulver
Metallcarbidpulver
Metallnitridpulver.

Das anorganische Pulver dient zum Aufbau der Stege des offenzelligen anorganischen Schaums. Dabei handelt es sich um keramische Materialien wie Aluminiumoxid, Zirkonoxid mit Magnesiumoxid oder Yttriumoxid teilweise oder ganz stabilisiert, Siliciumcarbid, Siliciumnitrid inklusive seiner gängigen Sinterhilfsmittel wie Aluminiumoxid und Yttriumoxid, Cordierit, Mullit, Wolframcarbid, Titancarbid, Tantalcarbid, Vanadiumcarbid, Titannitrid, Tantalnitrid oder Metallpulver wie Eisen, Kobalt, Nickel, Kupfer, Silber, Titan, Stahlpulver oder Legierungspulver von eisen-, nickel- oder kobaltbasierten Legierungen.

Die keramischen Pulver können auch untereinander gemischt sein, die Carbide, Nitride oder Metallpulver können ebenfalls untereinander gemischt sein.

Die mittleren Korngrößen der keramischen Pulver betragen 0,1 bis 10 *µ*m, vorzugsweise 0,3 bis 2 *µ* m; die Korngrößen der Metallpulver betragen 1 bis 50 *µ*m, vorzugsweise 2 bis 20 *µ*m.

Als Treibgasquelle können insbesondere Verbindungen eingesetzt werden, die bei einer pH-Änderung ein Treibgas freisetzen. Besonders geeignet sind dabei solche Verbindungen, die im sauren Medium Kohlendioxid abspalten. Als Treibmittel werden insbesondere Ammoniumcarbonat, Ammoniumcarbamat oder bevorzugt Ammoniumhydrogencarbonat eingesetzt, die im sauren Medium Kohlendioxid als Treibgas abspalten. Sie werden in Mengen von 0,3 bis 2 Gew.-%, bezogen auf das anorganische Pulver, eingesetzt.

Als Gerüstbildner werden erfindungsgemäß vorzugsweise eine oder mehrere Verbindungen eingesetzt, die feste Bindungen bei Änderung des pH-Wertes miteinander eingehen und die Schäume verfestigen. Besonders geeignet sind vernetzbare Harze. Besonders geeignet ist eine durch pH-Umschlag bei Raumtemperatur vernetzende Komponente, vorzugsweise niedermolekulare, wasserlösliche Harnstoff-Formaldehydharze. Diese Gerüstbildner können in Mengen von 2 bis 10 Gew.-% (als Feststoff berechnet), bezogen auf das anorganische Pulver, eingesetzt werden. Einen guten Überblick über handelsübliche Harnstoff-Formaldehydharze und ihre Anwendungen gibt das Buch "Aminoplaste" von A. Bachmann und T. Bertz, VEB Deutscher Verlag für Grundstoffindustrie, Leipzig 1970 mit einem speziellen Kapitel über Schäume ab Seite 153.

Im Sinne der Erfindung werden vorzugsweise bei Raumtemperatur schnell vernetzbare Harze eingesetzt. Derartige Harze weisen einen 2,8- bis 3-fachen Formaldehydüberschuß auf und vernetzen am besten bei pH-Werten von 3,5 bis 5. Der erfindungsgemäße Einsatz der Harze führt zu offenporigen Schäumen, die bereits 5 bis 10 min nach dem Schäumvorgang aufgrund ihrer hohen mechanischen Stabilität entformbar sind.

Das pH-Steuerungsmaterial weist erfindungsgemäß bevorzugterweise Verbindungen auf, die mit der Flüssigkeit, insbesondere mit dem Wasser, eine pH-Änderung bewirken. Als Säurebildner werden vorzugsweise organische Carbonsäureanhydride eingesetzt, die in der wäßrigen Mischung unlöslich sind und erst während des Schäumvorgangs durch Hydrolyse H₃O⁺-Ionen freisetzen. Als Säurebildner werden beispielsweise Phthalsäureanhydrid, Pyromellithsäuredianhydrid oder Maleinsäureanhydrid eingesetzt, wobei die Reaktivität in der angegebenen Reihenfolge zunimmt.

Die Schäumgeschwindigkeit kann eingestellt werden, indem man Anhydrid-pulver verschiedener Korngrößen benutzt. Je größer das Korn, desto geringer ist die Hydrolysegeschwindigkeit. Je kleiner das Anhydridkorn ist, desto größer sind seine spezifische Oberfläche, die Hydrolysegeschwindigkeit und die Schäumgeschwindigkeit. Optimale Korngrößen liegen im Bereich von 1 bis 200 *µ*m, vorzugsweise 10 bis 100 *µ*m.

Bei der Erfindung kann das Verhältnis von Säurebildner zu Treibmittel in besonders vorteilhafter Weise zur Steuerung der Schaumeigenschaften eingesetzt werden. Es wird insbesondere so eingestellt, daß sich das Treibmittel immer im molaren Unterschuß bezogen auf den Säurebildner befindet, damit nach Verbrauch des Treibmittels der pH-Wert von 8 bis 10 in das saure Milieu mit 3 bis 6 umschlagen kann. Pro Carbonsäureäquivalent muß dann beispielsweise weniger als ein Äquivalent Ammoniumhydrogencarbonat vorliegen.

Es ist bevorzugt, Ausgangsschlicker einzusetzen, die eines oder mehrere der folgenden Merkmale aufweisen:
a. Das Ausgangsschlickermaterial ist ein wäßriges Schlickermaterial.
b. Das Ausgangsschlickermaterial hat einen Volumenfüllgrad von 30 bis 60 Vol.-%, bezogen auf das stegbildende, sinterbare Pulver.
c. Das Ausgangsschlickermaterial besteht im wesentlichen aus folgenden Materialien:

| | | |
|---|---|---|
| a. | anorganisches Pulver inklusive Sinterhilfsmittel | 30-60 Vol.-Teile |
| b. | verdampfbare Flüssigkeit, insbesondere Wasser | 30-60 Vol.-Teile |
| c. | Dispergator | 0-4, vorzugsweise 0,5-3 Vol.-Teile |
| d. | Bindemittel | 2-12, vorzugsweise 4-10 Vol.-Teile |
| e. | Treibmittel bzw. Treibmittelprecursor | 1-8, vorzugsweise 2-6 Vol.-Teile |

d. Das Ausgangsschlickermaterial enthält als Viskositätsmodifizierer wasserlösliche, insbesondere unvernetzte hochmolekulare organische Polymere, insbesondere in einer Menge von 2 bis 10 Gew.-% (bezogen auf das sinterbare Pulvermaterial als 100 Gew.-%), wobei vorzugsweise Polyvinylpyrrolidone, Polyvinylformamide, Polyvinylalkohole verwendet werden.
e. Das Ausgangsschlickermaterial enthält ein Bindemittel, insbesondere in einer Menge von 1 bis 6 Gew.-% (bezogen auf das anorganische Sintermaterial als 100 Gew.-%), vorzugsweise eine Polyacrylsäureesterdispersion.

Die Erfindung besteht in einer weiteren Ausführungsform in einem Verfahren zur Herstellung von anorganischen Sinterschaumteilen. Bei diesem Verfahren wird in einer Verschäumstufe ein Ausgangsschlickermaterial, wie es hierin definiert ist, verschäumt. In einer pH-Änderungsstufe wird der pH-Wert des Ausgangsschlickermaterials so verändert, daß der Gerüstbildner ein den geschäumten Ausgangsschlicker stabilisierendes Gerüst bildet und ein stabilisierter Schaumkörper erhalten wird. Der stabilisierte Schaumkörper wird gegebenenfalls in einer Entformungsstufe entformt und getrocknet. In einer Gerüstentfernungsstufe wird das stabilisierende Gerüst aus dem stabilisierten Schaumkörper unter Ausbildung eines Grünschaumkörpers entfernt. Entformungsstufe und Gerüstentfernungsstufe werden vorzugsweise in einer Apparatur direkt nacheinander durchgeführt. Schließlich wird der Grünschaumkörper in einer Sinterstufe unter Ausbildung des anorganischen Sinterschaumteiles gesintert.

Bei dem Verfahren zur Herstellung von Sinterschaumkörpern wird das Ausgangsschlickermaterial vorzugsweise zunächst geformt. Dies kann insbesondere dadurch geschehen, daß das Ausgangsschlickermaterial in eine Form eingebracht wird. Dabei ist es bevorzugt, das Material einzuspritzen. Das Ausgangsschlickermaterial kann auch strangextrudiert und anschließend zerteilt werden. Weiterhin ist es möglich, das Material flach zu extrudieren und in Formen zu stanzen. Schließlich kann das Material auch preßgeformt werden.

Das geformte Ausgangsschlickermaterial wird verschäumt. Es ist bevorzugt, das pH-Steuerungsmaterial erst kurz vor der Formgebung beziehungsweise erst in der Form beizugeben. Gute Ergebnisse werden erzielt, wenn das pH-Steuerungsmaterial beispielsweise in das Ausgangsschlickermaterial in der Form eingerührt wird bzw. wenn das pH-Steuerungsmaterial in einen Extruder eingegeben wird, in dem die übrigen Bestandteile des Ausgangsschlickermaterials gemischt werden und der dieses dann in die Form beziehungsweise zur Zerteilung befördert.

Die erfindungsgemäß hergestellten Sinterkörper können als Katalysatoren oder Katalysatorträger, insbesondere als Träger, verwendet werden. Besonders zweckmäßig wird der poröse Sinterkörper noch mit katalytisch aktivem Material oder zu einem zu katalytisch aktivem Material umwandelbaren Material, insbesondere einem oder mehreren Edelmetallen, versehen. Dann handelt es sich bei solchem porösen Körper um einen (ggf. noch zu aktivierenden) Katalysator. Die Metalle beziehungsweise Edelmetalle sind dabei in einer Menge von 0,1 bis 5 Gew.-%, bezogen auf den gesamten porösen Körper, vorhanden. Besonders geeignete katalytisch aktive Materialien für solche porösen Körper sind Platin, Palladium, Kobalt, Nickel, Eisen oder Kupfer.

Als Dispergator können sterische Dispergiermittel eingesetzt werden. Sterisch wirkende Dispergatoren weisen eine Tensidstruktur auf, mit einer Haftgruppe ziehen sie auf die zu dispergierenden Pulver auf und bewirken so niedrige Viskositäten und hohe Füllgrade. Derartige Dispergatoren sind beispielsweise Tetramethylammoniumoleat oder Tetrabutylammoniumoleat. Zur Dispergierung der keramischen Pulver sind 0,5 bis 3%, bezogen auf die Pulvermasse, genügend, zur Dispergierung der größeren Metallpulver werden 0,1 bis 0,5%, bezogen auf die Pulvermasse, benötigt.

Da der Schäumvorgang durch mittelhohe Anfangsviskositäten bezüglich der Fließfähigkeit der Masse günstig beeinflußt wird, können noch wasserlösliche unvernetzte hochmolekulare organische Polymere als Viskositätsmodifier in Mengen von 2 bis 10 Gew.-%, bezogen auf das Pulver, zugesetzt werden. Die Menge an die Viskosität erhöhendem wasserlöslichen Polymer ist für jedes Pulver neu zu ermitteln. Ist die Viskosität zu niedrig, so entweicht das Treibgas ohne Schaumbildung; ist sie zu hoch, so ist die Schaumbildung ebenfalls behindert, das Treibgas entweicht ungenutzt aus Rissen und Spalten. Der Viskositätsmodifier sollte eine möglichst hohe Elastizität, d.h. Reißdehnung, aufweisen; vernetzte Polymere kommen deshalb nur bedingt in Frage: Nach dem Schäumen und Trocknen verleiht der Viskositätsmodifier dem Schaum noch stabilisierende, bindende Eigenschaften. Er erhöht die Festigkeit des noch ungesinterten Schaumkörpers. Gut geeignete Viskositätsmodifier sind lineare hochmolekulare Polvinylpyrrolidone und deren Copolymere, Polyvinylformamid und dessen Copolymere oder Polyvinylalkohole.

Als gut wirksame Bindemittel kommen vor allem wäßrige Polymerdispersionen in Frage, die beim Trocknen Filme ausbilden, welche die anorganischen Teilchen binden. Sie werden in Mengen von 1 bis 6 Gew.-%, bezogen auf das anorganische Pulver, eingesetzt. Besonders bevorzugt sind Dispersionen von Polyacrylestern, die besonders klebrige Filme ausbilden.

Die Herstellung der Schlicker für die Schäume erfolgt ohne zusätzliche aufwendige Apparaturen in konventionellen Mischern oder Knetern. Das Einstellen der optimalen Viskosität erfolgt am einfachsten nach Augenschein. Es wird zur Rezeptur jeweils soviel Pulver, Dispergator, Viskositätsmodifier oder Wasser zugegeben, bis der Schlicker unter seinem eigenen Gewicht gerade noch fließfähig ist. Je nach Pulverkorngröße beziehungsweise Pulveroberfläche ist der Volumenfüllgrad, bei dem die Fließgrenze erreicht wird, verschieden. Bei den verhältnismäßig geringen Korngrößen keramischer Pulver von 0,3 bis 2 im wird die Fließgrenze bei 30 bis 50 Vol.-% erreicht; bei den größeren Metallpulvern mit 2 bis 20 im mittlerem Komdurchmesser wird die Fließgrenze bei 35 bis 55 Vol.-% erreicht.

Die erfindungsgemäße Fertigung der offenzelligen anorganischen Schäume kann sowohl diskontinuierlich als auch kontinuierlich erfolgen. Bei diskontinuierlicher Fertigung erfolgt das Schäumen nach der Ansatzbereitung, falls erwünscht in einer Form. Um Granulate herzustellen, wird der Schlickeransatz gegebenenfalls bereits vor dem Schäumvorgang zu Teilen zerteilt und danach die Teile zu unregelmäßig geformten oder kugelförmigen Granulaten aufgeschäumt. Das geschäumte Teil wird bei 100 bis 130°C im Luftstrom getrocknet, dann wird mit einer Geschwindigkeit von 3 bis 5°C/min bis auf 350 bis 600°C aufgeheizt, zur restlosen Entfernung der organischen Bestandteile die Masse 1 h bei 350 bis 600°C belassen und sodann zum eigentlichen Sinterprozeß weiter aufgeheizt, Fe, Co, Ni z.B. auf 1.100 bis 1.200°C unter Wasserstoff, Cu auf 900 bis 950°C, ebenfalls unter Wasserstoff, Zirkonoxid unter Luft auf 1.450°C, Aluminiumoxid unter Luft auf 1.650°C oder Siliciumcarbid unter Argon auf 2.250°C.

Zur kontinuierlichen Fertigung wird der Schlicker diskontinuierlich bereitet, dann aber mittels einer kontinuierlich arbeitenden Schneckenpresse bei Raumtemperatur zu Strängen verarbeitet. Diese werden nach dem Austritt aus den Düsen auf einer sich auf einem Transportband mitbewegenden Unterlage aufgeschäumt und in einer sich anschließenden Trockenstrecke nachgetrocknet. Die als Säurebildner dienenden Carbonsäureanhydride, wie Phthalsäureanhydrid, werden bevorzugt erst beim Einzug der Masse in die Schneckenpresse zudosiert. Gegebenenfalls enthält die Schneckenpresse noch ein Mischteil zur besseren Verteilung des Säurebildners.

Die anorganischen Sinterschaumteile zeichnen sich aus durch ein zugängliches, offenes Porenvolumen von 40 bis 90% und Porenweiten im Bereich von 0,05 bis 3, vorzugsweise 0,1 bis 2 mm. Die bevorzugten anorganischen Sintermaterialien sind dabei die hierin definierten.

Die folgenden Beispiele zeigen bevorzugte Merkmale und optimale Rezepturen im Sinne der Erfindung.

### BEISPIELE

In einem Rührgefäß wird vollentsalztes Wasser vorgelegt. Darin werden unter Rühren der Dispergator, Ammoniumhydrogencarbonat als Treibmittel, der Viskositätsmodifier, Harnstoff-Formaldehydharz und bindende Dispersion bei Raumtemperatur eingemischt.

Als Dispergator wird eine 25%ige wäßrige Zubereitung von Tetramethylammoniumoleat eingesetzt, als Viskositätsmodifier ein Pulver eines hochmolekularen Polyvinylpyrrolidons (Luviskol® K90, BASF AG), als Binder eine Acrylesterdispersion mit 50% Feststoffgehalt (Acronal® S 360D der BASF AG), als Harnstoff-Formaldehydharz eine 50%ige wäßrige Lösung eines niedermolekularen Harzes mit dreifachem Formaldehydüberschuß; die Carbonsäureanhydride wurden auf Korngrößen von 10 bis 20 im gemahlen.

In der folgenden Tabelle sind die Einsatzstoffmengen auf die Reinstoffe bezogen, die Spalte Wasser zeigt die gesamte Wassermenge.

Nach Vermischen und Auflösen der wasserlöslichen Komponenten bei Raumtemperatur wird das anorganische Pulver, in den Beispielen Aluminium-oxidpulver mit einer mittleren Korngröße um 1 *µ*m, portionsweise eingerührt. Nach vollständiger Dispergierung ist der Ansatz fertig zum Schäumen. Zum Schäumen werden die angegebenen Carbonsäureanhydridmengen innerhalb von ca. 1 min eingemischt. Dies kann bereits in einer Form geschehen. Danach wird die Form kurz gerüttelt, um die Masse zu verteilen und große Luftblasen zu entfernen. Sodann beginnt die Masse unter Schäumen und unter Volumenerweiterung auf das 2- bis 5-fache aufzusteigen. Nach dem Aufschäumen, wobei bereits direkt offene Poren erhalten werden, wird noch 5 bis 10 min gewartet, dann sind die geschäumten Formteile durch Aufklappen der Form entnehmbar.

Nach den in den Beispielen 1 bis 4 gezeigten Rezepturen wurden Zylinder mit 100 und 55 mm Durchmesser und Höhen um 80 bis 90 mm geschäumt. Diese Zylinder wurden 10 h bei 130°C in einem Umlufttrockenschrank getrocknet, sodann in einen Sinterofen überführt und mit einer Heizrate von 5°C/min von Raumtemperatur auf 300°C erhitzt, 1 h bei 300°C belassen, dann mit 5°C/min auf 600°C aufgeheizt, 1 h bei 600°C belassen, dann mit 5°C/min auf 1.650°C geheizt, 3 h bei 1.650°C belassen und dann der Ofen unkontrolliert abkühlen gelassen.

Es wurden stabile, offenporöse zylindrische Schaumkörper erhalten, die in der Reihenfolge von Beispiel 1 bis 4 in Durchmesser und Höhe gleichermaßen um 24, 23, 18 und 21% geschrumpft waren. Die mittleren Porengrößen betrugen in allen Beispielen um 0,5 bis 2 mm, der Porenanteil betrug 78, 70, 77 und 83 Vol.-%.

### Ansätze der Beispiele 1 bis 4

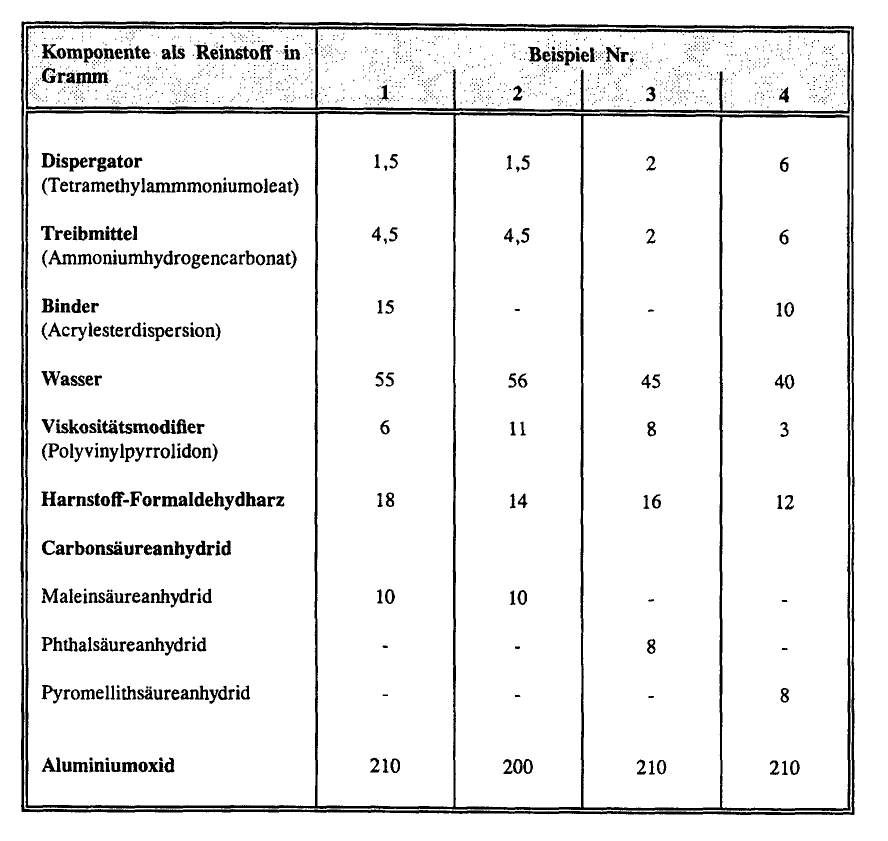

Die in den Beispielen erzeugten Schaumkörper sind offenporige, hoch gasdurchlässige Schaumkörper von großer Härte. Sie sind beispielsweise geeignet als Katalysatorträger.

## Patentansprüche

1. Verfahren zum Stabilisieren eines verschäumten Ausgangsschlickermaterials, **dadurch gekennzeichnet**,
1. daß ein Ausgangsschlickermaterial verschäumt wird, das folgende Bestandteile enthält:
a. anorganisches Sintermaterial,
b. Treibgasquelle,
c. Gerüstbildner, der bei einer Veränderung des pH-Wertes des Ausgangsschlickermaterials ein Gerüst bildet,
d. pH-Steuerungsmaterial,
e. Flüssigkeit,
f. gegebenenfalls eines oder mehrere der folgenden Materialien:
- Dispergator
- Binder
- Viskositätsmodifizierer
und
2. daß der pH-Wert des Ausgangsschlickermaterials zum Ingangsetzen bzw. Beschleunigen der Ausbildung des Gerüstes aus dem Gerüstbildner verändert wird.

2. Verfahren nach Anspruch 1, **dadurch gekennzeichnet, daß** der pH-Wert des Ausgangsschlickermaterials so verändert wird, daß der Gerüstbildner ein den geschäumten Ausgangsschlicker stabilisierendes Gerüst bildet und ein stabilisierter Schaumkörper erhalten wird, und daß nach der Ausbildung des Gerüsts in einer Gerüstentfernungsstufe das stabilisierende Gerüst aus dem stabilisierten Schaumkörper unter Ausbildung eines Grünschaumkörpers entfernt wird und daß der Grünschaumkörper in einer Sinterstufe unter Ausbildung des anorganischen Sinterschaumteiles gesintert wird.

3. Verfahren nach Anspruch 1, **dadurch gekennzeichnet, daß** als Treibgasquelle eine Verbindung, die bei einer pH-Änderung ein Treibgas freisetzt, eingesetzt wird.

4. Verfahren nach Anspruch 1, **dadurch gekennzeichnet, daß** als Gerüstbildner solche Verbindungen eingesetzt werden, die bei pH-Änderung feste Verbindungen miteinander bilden, die eine mechanische Verfestigung des Schaumes bewirken, und daß als pH-Steuerungsmaterial eine Verbindung eingesetzt wird, die mit der Flüssigkeit eine pH-Änderung bewirkt.

5. Verfahren nach Anspruch 1, **dadurch gekennzeichnet, daß** Treibgasquelle, pH-Steuerungsmaterial und Flüssigkeit mengenmäßig so aufeinander abgestimmt eingesetzt werden, daß die Flüssigkeit und das pH-Steuerungsmaterial eine Säure bilden, die zunächst mit der Treibgasquelle das Treibgas zur Schaumbildung freisetzt und daß die weiter gebildete Säure dann mit dem Gerüstbildner das den Schaum stabilisierende Gerüst bildet.

6. Verfahren nach Anspruch 1, **dadurch gekennzeichnet, daß** als Ausgangsschlickermaterial ein wäßriges Schlickermaterial mit einem Volumenfüllgrad von 30-60 Vol.-%. eingesetzt wird, das im wesentlichen aus 30-60 Vol.-Teilen anorganischem Pulver inklusive Sinterhilfsmittel, 30-60 Vol.-Teilen verdampfbarer Flüssigkeit, 0-4 Vol.-Teilen Dispergator, 2-12 Vol.-Teilen Bindemittel und 1-8 Vol.-Teilen Treibmittel bzw. Treibmittelprecursor besteht und das als Viskositätsmodifizierer wasserlösliche, organische Polymere, sowie ein Bindemittel enthält.

7. Verfahren nach einem der vorhergehenden Ansprüche, **dadurch gekennzeichnet, daß** das Ausgangsschlickermaterial zunächst geformt wird und das geformte Ausgangsschlickermaterial verschäumt wird.

8. Verfahren nach Anspruch 1, **dadurch gekennzeichnet, daß** das pH-Steuerungsmaterial dem Ausgangsschlickermaterial erst kurz vor der Formgebung bzw. in der Form beigegeben wird.

## Claims

1. A process for stabilizing a foamed starting slip, wherein
1. a starting slip comprising the following constituents:
a. sinterable inorganic material,
b. blowing gas source,
c. framework former which forms a framework when the pH of the starting slip is changed,
d. pH-control material,
e. liquid,
f. optionally one or more of the following materials:
- dispersant
- binder
- viscosity modifier
is foamed and
2. the pH of the starting slip is changed to initiate or acceleration the formation of the framework from the framework former.

2. A process as claimed in claim 1, wherein the pH of the starting slip is changed so that the framework former forms a framework which stabilizes the foamed starting slip and a stabilized foam body is obtained, and, after formation of the framework, the stabilizing framework is removed from the stabilized foam body in a framework removal step to form a green foam body and the green foam body is sintered in a sintering step to form the sintered inorganic foam part.

3. A process as claimed in claim 1, wherein the blowing gas source used is a compound which liberates a blowing gas when the pH is changed.

4. A process as claimed in claim 1, wherein the framework formers used are compounds which when the pH is changed form strong bonds with one another so as to effect mechanical strengthening of the foam, and the pH-control material used is a compound which with the liquid produces a pH change.

5. A process as claimed in claim 1, wherein the amounts of blowing gas source, pH-control material and liquid are matched to one another so that the liquid and the pH-control material form an acid which firstly reacts with the blowing gas source to liberate the blowing gas for foam formation and the further acid formed then reacts with the framework former to form the foam-stabilizing framework.

6. A process as claimed in claim 1, wherein the starting slip used is an aqueous slip which has a solids content of 30-60% by volume and consists essentially of 30-60 parts by volume of inorganic powder including sintering aids, 30-60 parts by volume of a vaporizable liquid, 0-4 parts by volume of dispersant, 2-12 parts by volume of binder and 1-8 parts by volume of blowing agent or blowing agent precursor and which comprises water-soluble, organic polymers as viscosity modifiers and also a binder.

7. A process as claimed in any of the preceding claims, wherein the starting slip is firstly shaped and the shaped starting slip is foamed.

8. A process as claimed in claim 1, wherein the pH-control material is added to the starting slip only shortly before shaping or in the mold.

## Revendications

1. Procédé de stabilisation d'un matériau de départ de barbotine expansée, **caractérisé en ce que**
1. on expanse une barbotine de départ contenant les constituants suivants:
a. matériau inorganique de frittage
b. source de gaz propulseur
c. un agent de structuration formant une structure lors d'un changement de pH du matériau de barbotine de départ,
d. une agent de contrôle du pH,
e. un liquide,
f. éventuellement une ou plusieurs des matières suivantes:
- agent de dispersion
- liant
- modificateur de viscosité
et
2. on modifie le pH du matériau de barbotine de départ pour amorcer ou accélérer la formation de la structure par l'agent de structuration.

2. Procédé selon la revendication 1, **caractérisé en ce que** le pH du matériau de barbotine de départ est modifié de manière que l'agent de structuration forme une structure stabilisant la barbotine de départ expansée, et que l'on obtient un corps expansé stabilisé, et qu'après la formation de la structure, dans une étape d'élimination de la structure, la structure stabilisante est éliminée du corps expansé stabilisé avec formation d'un corps expansé vert, et que le corps expansé vert est fritté dans une étape de frittage avec formation de la partie expansée frittée inorganique.

3. Procédé selon la revendication 1, **caractérisé en ce que** l'on utilise comme source de gaz propulseur un composé libérant un gaz propulseur lors d'une variation de pH.

4. Procédé selon la revendication 1, **caractérisé en ce que** l'on utilise comme agents de structuration des composés qui, lors d'une variation du pH, forment entre eux des composés solides, assurant un renforcement mécanique de la mousse, et que l'on utilise comme agent d'ajustement du pH un composé provoquant avec le liquide une modification du pH.

5. Procédé selon la revendication 1, **caractérisé en ce que** la source de gaz propulseur, l'agent d'ajustement du pH et le liquide sont quantitativement proportionnés de telle manière que la liquide et l'agent d'ajustement du pH forment un acide, qui libère d'abord le gaz propulseur par action avec la source de gaz propulseur, et que l'acide formé forme ensuite avec l'agent de structuration la structure qui stabilise la mousse.

6. Procédé selon la revendication 1, **caractérisé en ce que** l'on met en oeuvre, comme matériau de barbotine de départ, un matériau de barbotine aqueux d'un degré de remplissage de 30 à 60% en volume, essentiellement constitué de 30 à 60 parties en volume de poudre inorganique comprenant un adjuvant de frittage, 30 à 60 parties en volume de liquide évaporable, 0 à 4 parties en volume d'agent dispersion, 2 à 12 parties en volume de liant et 1 à 8 parties en volume d'agent propulseur et/ou de précurseur d'agent propulseur, et contenant comme modificateurs de viscosité des polymères organiques hydrosolubles, ainsi qu'un liant.

7. Procédé selon l'une des revendications qui précèdent, **caractérisé en ce que** le matériau de barbotine de départ est d'abord formé, puis que la matériau de barbotine de départ est expansé après formage.

8. Procédé selon la revendication 1, **caractérisé en ce que** l'agent d'ajustement de pH est ajouté au matériau de barbotine de départ peu avant le formage et/ou dans le moule.
